# FASCICULE DE BREVET EUROPEEN

(11) **EP 4 158 271 B1**
(45) Date de publication et mention de la délivrance du brevet: **11.09.2024**
(21) Numéro de dépôt: 21729510.4
(22) Date de dépôt: 28.05.2021
(51) Int. Cl.: F28F 27/00, F28F 9/00, B60H 1/00, F28F 9/02

(54) **APPAREIL DE CLIMATISATION AVEC UN ORGANE DE PROTECTION POUR UNE TUBULURE D'UN ÉCHANGEUR DE CHALEUR**
KLIMAANLAGE MIT EINEM SCHUTZELEMENT FÜR EINEN VERTEILER EINES WÄRMETAUSCHERS
AIR CONDITIONING DEVICE WITH A PROTECTIVE MEMBER FOR A MANIFOLD OF A HEAT EXCHANGER

(30) Priorité: 01.06.2020 FR 2005747
(43) Date de publication de la demande: 05.04.2023
(73) Titulaire: VALEO SYSTEMES THERMIQUES, 78320 Le Mesnil Saint-Denis (FR)
(72) Inventeur: PIERRES, Philippe, 78322 Le Mesnil-Saint-Denis Cedex (FR); ROUSSEAU, Yves, 78322 Le Mesnil-Saint-Denis Cedex (FR); GONTIER, Cyril, 78322 Le Mesnil-Saint-Denis Cedex (FR); VARELA SANTOYO, Nestor Ismael, 78322 Le Mesnil-Saint-Denis Cedex (FR)
(74) Mandataire: Valeo Systèmes Thermiques
(86) Numéro de dépôt international: PCT/EP2021/064360
(87) Numéro de publication internationale: WO 2021/244968

(56) Documents cités:
- EP-A1- 1 652 759
- WO-A1-2009/066260
- WO-A1-2015/082433
- DE-A1- 19 711 034
- FR-A1- 3 058 361

## Description

La présente invention se rapporte à un appareil de climatisation selon le préambule de la revendication 1 avec un organe de protection pour une tubulure d'un échangeur de chaleur d'un appareil de climatisation de véhicule automobile, cet échangeur étant par exemple un évaporateur de l'appareil de climatisation, cet organe de protection comportant une paroi agencée pour entourer au moins partiellement la tubulure à protéger, cet organe de protection formant une portion de paroi d'un canal d'air à l'intérieur de l'appareil de climatisation.

Les appareils de chauffage, de ventilation et de refroidissement, ou encore appelés appareil de climatisation, pour véhicules automobiles comprennent, de manière connue, au moins deux paires de conduits qui sont reliés respectivement à l'échangeur de chaleur pour le chauffage de l'air et à l'évaporateur pour le refroidissement de l'air. Les extrémités libres de ces conduits ressortent à l'extérieur des appareils pour être reliées aux circuits de refroidissement du moteur et de conditionnement de l'air, c'est pourquoi elles restent découvertes sur un tronçon plus ou moins long. En cas de fuites ou de formation de condensation, les conduits peuvent libérer des fluides qui se dispersent de manière incontrôlée dans l'habitacle du véhicule automobile, par exemple sous le tableau de bord, avec un risque consécutif de pannes. Des tubes permettant de recouvrir ces conduits sont difficiles à réaliser et à installer pour résoudre cet inconvénient, à cause de la forme et de la disposition de ces derniers. En outre, il est difficile de maintenir les extrémités libres des conduits en position pendant leur raccordement auxdits circuits.

Ces appareils sont également appelés HVAC ( heating, ventilation and air-conditioning) en anglais. FR 3 058 361 A1 décrit un appareil de climatisation selon le préambule de la revendication 1.

L'invention vise à améliorer la protection de telles tubulures.

L'invention a ainsi pour objet un appareil de climatisation selon la revendication 1.

Selon l'un des aspects de l'invention, l'organe de protection est réalisé d'un seul tenant, notamment en matière plastique.

Selon l'un des aspects de l'invention, l'organe de protection comporte une jambe faisant partie de la portion de paroi du canal d'air.

Selon l'un des aspects de l'invention, l'organe de protection comporte un toit sur lequel se raccorde la jambe, ce toit et cette jambe formant la portion de paroi du canal d'air.

Selon l'un des aspects de l'invention, le toit comporte une extension agencée pour entourer au moins partiellement la tubulure à protéger.

Selon l'un des aspects de l'invention, cette extension présente une frome courbe, notamment avec une concavité dirigée vers la tubulure.

Selon l'un des aspects de l'invention, le toit forme un séparateur entre le canal d'air et la tubulure.

L'invention a donc pour objet un appareil de climatisation selon la revendication 1 notamment pour véhicule automobile, comportant un échangeur de chaleur, une tubulure reliée à cet échangeur de chaleur et un organe de protection, agencé pour protéger cette tubulure.

Selon l'invention, l'appareil de climatisation comporte un élément de boitier supérieur et un élément de boitier inférieur agencés pour être assemblés ensemble, et ainsi définir globalement un boitier de l'appareil.

Selon l'un des aspects de l'invention, l'élément de boitier supérieur comporte une fenêtre et l'organe de protection de la tubulure vient se loger dans la fenêtre, et notamment en étant dans la continuité de l'élément de boitier supérieur.

Autrement dit, une fois l'organe de protection placé dans la fenêtre, cet organe de protection et l'élément de boitier supérieur définissent une paroi continue d'un canal d'air de l'appareil de climatisation.

Selon l'un des aspects de l'invention, la fenêtre est sensiblement à un milieu de l'élément de boitier supérieur.

Selon l'un des aspects de l'invention, l'élément de boitier supérieur comporte une extension agencée pour former avec l'extension de l'organe de protection un logement entourant la ou les tubulures de l'échangeur de chaleur.

Selon l'un des aspects de l'invention, ce logement est notamment de profil rectangulaire avec des coins arrondis.

Selon l'un des aspects de l'invention, ce logement permet d'isoler la ou les tubulures de flux d'air dans l'appareil de climatisation.

L'invention permet notamment d'éviter la condensation sur la ou les tubulures.

L'invention permet également d'atténuer des bruits entre la boucle de climatisation et l'appareil de climatisation.

Selon l'un des aspects de l'invention, l'organe de protection est agencé pour être fixé sur l'élément de boitier supérieur, et notamment en étant maintenu en sandwich entre les éléments de boitier supérieur et inferieur.

Selon l'un des aspects de l'invention, cet organe de protection comporte un bord qui longe une jointure entre les deux éléments de boitier.

Selon l'un des aspects de l'invention, l'appareil de climatisation comporte une paroi de séparation de flux d'air ajouté entre les deux éléments de boitier, et l'organe de protection vient en serrage sur cette paroi de séparation.

Selon l'un des aspects de l'invention, l'organe de protection est fixé aux éléments de boitier sans éléments de fixation supplémentaires tels que des vis.

L'invention permet d'avoir un ensemble mécaniquement plus robuste.

L'appareil de climatisation est de type semi-centré. Ceci signifie que l'appareil comprend un pulseur d'air, encore appelé Blower en anglais, qui est disposé sur un côté de l'appareil. Ainsi si l'on coupe fictivement l'appareil de climatisation en deux moitiés par un plan passant par l'organe de protection, et ce plan coupant perpendiculairement le plan de joint entre les éléments de boitier, le pulseur d'air se trouve dans l'une de ces deux moitiés.

L'invention et ses différentes applications seront mieux comprises à la lecture de la description qui suit et à l'examen des figures qui l'accompagnent :
la [Fig. 1] illustre schématiquement un appareil de climatisation selon un mode de réalisation non limitatif de l'invention,

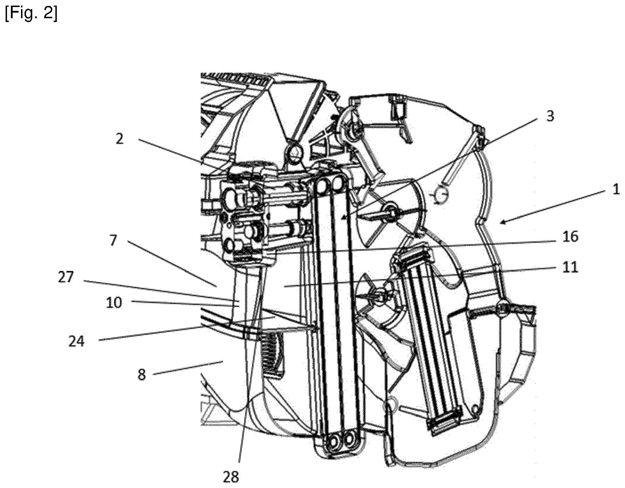

la [Fig. 2] illustre une partie de l'appareil de la figure 1.

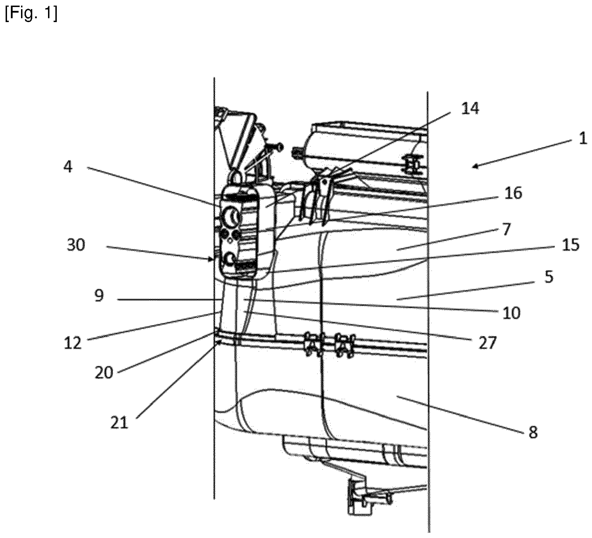

On a représenté sur Fig. 1 un appareil de climatisation 1, ou HVAC, selon un exemple de réalisation de l'invention. Cet appareil est agencé pour avoir, en son sein, des flux d'air séparés en haut et en bas. Ce type d'appareil est appelé à double couche, ou Dual Layer.

Cet appareil 1 comprend des tubulures 2 qui sont reliées à un évaporateur 3 pour le refroidissement de l'air. Les extrémités libres de ces tubulures 2 ressortent à l'extérieur d'un boitier 5 de l'appareil de climatisation pour être reliées via une bride 4 aux circuits de refroidissement du moteur et de conditionnement de l'air, non représentés.

L'appareil de climatisation 1 comporte un élément de boitier supérieur 7 et un élément de boitier inférieur 8 agencés pour être assemblés ensemble, et ainsi définir globalement un boitier 5 de l'appareil.

L'élément de boitier supérieur 7 comporte une fenêtre 9 et un organe de protection 10 des tubulures 2 vient se loger dans la fenêtre 9, en étant dans la continuité de l'élément de boitier supérieur 7.

Autrement dit, une fois l'organe de protection 10 placé dans la fenêtre 9, cet organe de protection 10 et l'élément de boitier supérieur 7 définissent une paroi continue 12 d'un canal d'air 11 de l'appareil de climatisation.

La fenêtre 9 est sensiblement à un milieu de l'élément de boitier supérieur.

L'élément de boitier supérieur 7 comporte une extension 14 agencée pour former avec une extension 15 de l'organe de protection 10 un logement 16 entourant la ou les tubulures 2 de l'échangeur de chaleur.

Ce logement 16 est notamment de profil rectangulaire avec des coins arrondis.

Ce logement 16 permet d'isoler la ou les tubulures de flux d'air dans l'appareil de climatisation.

L'invention permet également d'atténuer des bruits entre la boucle de climatisation et l'appareil de climatisation.

L'organe de protection 10 est agencé pour être fixé sur l'élément de boitier supérieur 7, en étant maintenu en sandwich entre les éléments de boitier supérieur 7 et inferieur 8.

Cet organe de protection 10 comporte un bord 20 qui longe une jointure 21 entre les deux éléments de boitier 7 et 8.

L'appareil de climatisation 1 comporte une paroi de séparation 24 de flux d'air ajouté entre les deux éléments de boitier 7 et 8, et l'organe de protection 10 vient en serrage sur cette paroi de séparation 25.

L'organe de protection 10 est fixé aux éléments de boitier 7 et 8 sans éléments de fixation supplémentaires tels que des vis.

L'organe de protection 10 est réalisé d'un seul tenant, notamment en matière plastique.

L'organe de protection 10 comporte une jambe 27 faisant partie de la portion de paroi du canal d'air 11.

L'organe de protection 10 comporte un toit 28 sur lequel se raccorde la jambe 27, ce toit et cette jambe formant la portion de paroi 12 du canal d'air. Cette jambe 27 forme une portion de paroi délimitant la canal d'air 11.

Le toit 28 comporte l'extension 15 agencée pour entourer au moins partiellement la tubulure 2 à protéger.

Cette extension 15 présente une frome courbe, notamment avec une concavité dirigée vers la tubulure.

Le toit 28 forme un séparateur entre le canal d'air et la tubulure.

L'extension 15 et le toit 28 forme une paroi 30 entourant les tubulures 2.

L'appareil de climatisation est de type semi-centré. Ceci signifie que l'appareil comprend un pulseur d'air, encore appelé Blower en anglais, qui est disposé sur un côté de l'appareil. Dans la disposition de la figure 1, le pulseur d'air, d'un groupe moto-ventilateur, est disposé à droite de l'organe de protection, lequel est notamment sensiblement à un milieu de cet appareil.

## Revendications

1. Appareil de climatisation (1) notamment pour véhicule automobile, comportant un échangeur de chaleur, une tubulure reliée à cet échangeur de chaleur et un organe de protection (10) , cet échangeur étant par exemple un évaporateur de l'appareil de climatisation, cet organe de protection comportant une paroi (30) agencée pour entourer au moins partiellement la tubulure à protéger, cet organe de protection formant une portion de paroi (27) d'un canal d'air à l'intérieur de l'appareil de climatisation, l'appareil de climatisation comportant un élément de boitier supérieur (7) et un élément de boitier inférieur (8) agencés pour être assemblés ensemble, et ainsi définir globalement un boitier de l'appareil, **caractérisé en ce que** l'organe de protection est fixé sur l'élément de boitier supérieur, et maintenu en sandwich entre les éléments de boitier supérieur (7) et inferieur.

2. Appareil selon la revendication précédente, dans lequel l'organe de protection (10) est réalisé d'un seul tenant, notamment en matière plastique.

3. Appareil selon l'une des revendications précédentes, dans lequel l'organe de protection comporte une jambe (27) faisant partie de la portion de paroi du canal d'air.

4. Appareil selon la revendication précédente, dans lequel l'organe de protection (10) comporte un toit (28) sur lequel se raccorde la jambe (27), ce toit et cette jambe formant la portion de paroi du canal d'air.

5. Appareil selon l'une des revendications précédentes, dans lequel l'élément de boitier supérieur comporte une fenêtre et l'organe de protection de la tubulure vient se loger dans la fenêtre, et notamment en étant dans la continuité de l'élément de boitier supérieur.

6. Appareil selon l'une des revendications précédentes, dans lequel l'élément de boitier supérieur (7) comporte une extension agencée pour former avec l'extension de l'organe de protection un logement entourant la ou les tubulures de l'échangeur de chaleur.

7. Appareil selon l'une des revendications précédentes, dans lequel cet organe de protection comporte un bord qui longe une jointure entre les deux éléments de boitier (7,8).

8. Appareil selon l'une des revendications précédentes, dans lequel cet appareil est de type semi-centré.

## Patentansprüche

1. Klimaanlagenvorrichtung (1), insbesondere für ein Kraftfahrzeug, umfassend einen Wärmetauscher, einen Stutzen, der mit diesem Wärmetauscher verbunden ist, und ein Schutzelement (10), wobei dieser Tauscher beispielsweise ein Verdampfer der Klimaanlagenvorrichtung ist, wobei dieses Schutzelement eine Wand (30) umfasst, die dazu eingerichtet ist, den zu schützenden Stutzen mindestens teilweise zu umgeben, wobei dieses Schutzelement einen Wandabschnitt (27) eines Luftkanals im Inneren der Klimaanlagenvorrichtung bildet, wobei die Klimaanlagenvorrichtung einen oberen Gehäuseteil (7) und einen unteren Gehäuseteil (8) umfasst, die dazu eingerichtet sind, zusammengefügt zu werden und so ein Gehäuse der Vorrichtung global zu definieren, **dadurch gekennzeichnet, dass** das Schutzelement an dem oberen Gehäuseteil befestigt ist und zwischen dem oberen (7) und dem unteren Gehäuseteil eingeklemmt ist.

2. Vorrichtung nach dem vorhergehenden Anspruch, wobei das Schutzelement (10) einstückig, insbesondere aus Kunststoff, hergestellt ist.

3. Vorrichtung nach einem der vorhergehenden Ansprüche, wobei das Schutzelement ein Bein (27) umfasst, das zu dem Wandabschnitt des Luftkanals gehört.

4. Vorrichtung nach dem vorhergehenden Anspruch, wobei das Schutzelement (10) ein Dach (28) umfasst, an das sich das Bein (27) anschließt, wobei dieses Dach und dieses Bein den Wandabschnitt des Luftkanals bilden.

5. Vorrichtung nach einem der vorhergehenden Ansprüche, wobei der obere Gehäuseteil ein Fenster umfasst und das Schutzelement des Stutzens in dem Fenster zu liegen kommt und dabei insbesondere den oberen Gehäuseteil fortsetzt.

6. Vorrichtung nach einem der vorhergehenden Ansprüche, wobei der obere Gehäuseteil (7) eine Erweiterung umfasst, die dazu eingerichtet ist, mit der Erweiterung des Schutzelements eine Aufnahme zu bilden, die den oder die Stutzen des Wärmetauschers umgibt.

7. Vorrichtung nach einem der vorhergehenden Ansprüche, wobei dieses Schutzelement einen Rand umfasst, der entlang einer Verbindungsstelle zwischen den zwei Gehäuseteilen (7, 8) führt.

8. Vorrichtung nach einem der vorhergehenden Ansprüche, wobei diese Vorrichtung vom semizentrierten Typ ist.

## Claims

1. Air-conditioning unit (1), in particular for a motor vehicle, having a heat exchanger, a pipe connected to this heat exchanger and a protective member (10), this exchanger being for example an evaporator of the air-conditioning unit, this protective member having a wall (30) arranged to at least partially surround the pipe to be protected, this protective member forming a portion of wall (27) of an air channel inside the air-conditioning unit, the air-conditioning unit having an upper housing element (7) and a lower housing element (8) that are arranged to be joined together, and thus to define, overall, a housing of the unit, **characterized in that** the protective member is fastened to the upper housing element, and held sandwiched between the upper housing element (7) and the lower housing element.

2. Unit according to the preceding claim, wherein the protective member (10) is made in a single piece, in particular from plastic material.

3. Unit according to either of the preceding claims, wherein the protective member has a leg (27) forming part of the portion of wall of the air channel.

4. Unit according to the preceding claim, wherein the protective member (10) has a roof (28) to which the leg (27) is connected, this roof and this leg forming the portion of wall of the air channel.

5. Unit according to one of the preceding claims, wherein the upper housing element has a window and the member for protecting the pipe is housed in the window, in particular being in the continuity of the upper housing element.

6. Unit according to one of the preceding claims, wherein the upper housing element (7) has an extension arranged to form, with the extension of the protective member, an enclosure surrounding the one or more pipes of the heat exchanger.

7. Unit according to one of the preceding claims, wherein this protective member has an edge that runs along a joint between the two housing elements (7, 8).

8. Unit according to one of the preceding claims, wherein this unit is of the semi-centred type.
